# EUROPEAN PATENT APPLICATION

(11) **EP 2 501 148 A1**
(43) Date of publication of application: **19.09.2012**
(21) Application number: 11158225.0
(22) Date of filing: 15.03.2011
(51) Int. Cl.: H04Q 1/02, H04Q 1/14

(54) **Mounting adapter**

(71) Applicant: 3M Innovative Properties Company, Saint Paul, MN 55133-3427 (US)
(72) Inventor: Kuepper, Peter, 42285, Wuppertal (DE); Otto, Hans-Dieter, 51688, Wipperfuerth (DE); Bund, Christine, 42111, Wuppertal (DE)
(74) Representative: Bergen, Katja

(57) **Abstract**

The invention relates to a mounting adapter (1; 101; 201) for mounting different types of telecommunications terminal strips (2', 2"; 102', 102"; 202', 202") with detachable fixing means (9', 9"; 109', 109"; 209', 209") on a rack (3; 103; 203) comprising two parallel holding structures (5; 105; 205). The mounting adapter comprises a central portion (3; 103; 203) with a fixing structure for fixing the mounting adapter to the rack and at least two extensions (16, 17; 116, 117; 216, 217) extending from the central portion for receiving the detachable fixing means of the terminal strip. Each of the extension is adapted to receive the detachable fixing means of a certain type of a terminal strip. The invention also relates to a mounting system for mounting different types of telecommunications terminal strips.

## Description

The invention relates to a mounting adapter for mounting different types of telecommunications terminal strips on a rack comprising two parallel holding structures. The invention also relates to a mounting system for mounting different types of telecommunications terminal strips.

In the field of telecommunications, numerous customers are connected with the switch of a telecommunications company via telecommunications lines. The customers can also be called subscribers. The switch is also called an exchange. Between the subscriber and the switch, sections of the telecommunications lines (wires) are connected with each other at telecommunications terminal or termination strips. The terminal strips establish an electrical connection between a wire which is attached to the terminal strip at a first side, and another wire which is attached to the terminal strip at a second side. Plural terminal strips can be put together at a distribution point, such as a main distribution frame, an intermediate distribution frame, an outside cabinet or a distribution point located, for example, in an office building or on a particular floor of an office building. To allow flexible wiring, some telecommunications lines are connected with first terminal strips in a manner to constitute a permanent connection. Flexibility is realized by so-called jumpers, which flexibly connect contacts of the first terminal strip with contacts of a second terminal strip. In a distribution point different kind of telecommunications terminal strips may be used.

DE 94 02 908 U1 discloses a mounting rail for mounting telecommunications terminal strips to a frame. The mounting rail comprises a first arm for fixing the mounting rail to a frame and a second arm for holding a telecommunications terminal strip. The shape of the mounting rail is adapted to the seize and the shape of one type of a telecommunications terminal strip.

Other mounting adapter parts are known as well and they are described for example in EP 1 005 235 A2, EP 0 304 393 A2, DE 94 13 265 U1 or WO 2004/047 463 A1. The known mounting adapters all comprise structures for being fixed to a frame and structures for holding a certain type of telecommunications terminal strip.

There is a need to provide a mounting adapter that is capable to mount different types of telecommunications terminal strips to a rack. Different types of telecommunications terminal strips may have different fixing means and they may differ in their length, such that their fixing means are located at different positions relative to the rack. There is also a need to provide a mounting system for mounting different types of telecommunications terminal strips.

The present invention provides a mounting adapter for mounting different types of telecommunications terminal strips with detachable fixing means on a rack comprising two parallel holding structures. The mounting adapter comprises a central portion with a fixing structure for fixing the mounting adapter to the rack and at least two extensions extending from the central portion for receiving the detachable fixing means of the terminal strip. Each of the extension is adapted to receive the detachable fixing means of a certain type of a terminal strip.

The mounting adapter according to the invention basically comprises a central portion with a fixing structure, wherein the fixing structure may be any kind of suitable fixing structure for fixing the adapter to a rack. It may for example be a fixing structure allowing to fix the mounting adapter in a detachable way to the rack, like for example by screwing, clipping, clamping etc.. The mounting adapter further comprises at least two extensions extending from the central portion for receiving the detachable fixing means of the terminal strip. The extensions may be adapted in their shape as well as in their position relative to the rack when the adapter is fixed to the rack to receive fixing means of a certain type of a terminal strip. The shape of the extensions may be adapted such that the extensions comprise structures that correspond to the detachable fixing structures of certain types of telecommunications terminal strips and are able to hold the strips in a detachable manner. Depending on the number of extensions the mounting adapter comprises, it may be used for mounting a certain number of different types of telecommunications terminal strips on a rack.

According to one embodiment of the invention, the mounting adapter may be fixed to the rack in different positions, thereby providing the possibility of adapting the position of the two extensions relative to the rack a terminal strip is mounted on. By designing the mounting adapter such that it may be fixed to the rack in different positions, the position of the extensions relative to the rack may be adapted such that telecommunications terminal strips with for example different length may be mounted to the rack over the same mounting adapter. The different positions of the mounting adapters may be achieved by for example rotating the adapter through a certain angle, such as for example an angle of 90°, 120° or 180°.

According to another embodiment of the invention, the extensions of the mounting adapter may extend in opposite directions. By fixing the mounting adapter in a first position relative to the rack a first extension extends in a direction ready for receiving a first type of a terminal strip. By turning the mounting adapter through 180° and fixing it in this second position relative to the rack a second extension extends in the direction ready for receiving another type of a terminal strip.

It is also possible to design the mounting adapter such that the two extensions of the mounting adapter extend in the same direction. In such an embodiment the position of the mounting adapter does not need to be changed for bringing the extensions in a direction ready for receiving a terminal strip. It is also possible to change the position of the mounting adapter with extensions extending in the same direction for adapting the positions of the extensions relative to the rack. For example, it is possible to position the adapters inside or outside the rack. According to another embodiment the fixing structure of the central portion comprises a channel for receiving fixing screws for fixing the mounting adapter to the rack. A channel for receiving fixing screws provides a very flexible fixing structure since the screws may be received in any position along the channel. The channel may comprise a threaded surface for receiving and holding a screw. It is also possible that the screws have a self threading surface such that the surface of the channel does not need to be threaded. Other fixing structures are possible as well such as for example bolts, clips, expansion bolts or blind rivets.

The extensions may comprise undercuts for receiving latch hooks from the detachable fixing means of the telecommunications terminal strips. The extensions may also comprise other kind of structures for receiving detachable fixing means of the terminal strips, such as for example cut outs.

The mounting adapter according to the invention may be made out of electrically conductive material, such as for example metal. It is also possible to make the mounting adapter out of electrically conductive plastic or to apply an electrically conductive coating to a mounting adapter out of electrically non-conductive material.

The mounting adapter according to the invention may be a rail and may be used for mounting several telecommunications terminal strips to a rack. The mounting adapter according to the invention may comprise predetermined breaking points to adapt the length of the mounting adapter.

The present invention also provides a mounting system for mounting different types of telecommunications terminal strips with detachable fixing means. The mounting system comprises a rack with two parallel holding structures as well as at least two mounting adapters as described above. The mounting adapters may be fixed to the rack in different positions. They thereby provide the possibility of adapting the position of the two extensions relative to a terminal strip to be mounted on the rack.

The invention will now be described in more detail with reference to the following Figures exemplifying particular embodiments of the invention:
- Fig. 1: a side view of a first embodiment of a mounting adapter according to the invention together with a telecommunications terminal strip and a rack the strip is mounted on, wherein the mounting adapter is fixed to the rack in a first position and holds a first type of terminal strip;
- Fig. 2: a detailed view of the mounting adapter shown in Fig. 1;
- Fig. 3: a side view of the mounting adapter shown in Fig. 1, wherein the mounting adapter is fixed to the rack in a second position and holds a second type of terminal strip;
- Fig. 4: a detailed view of the mounting adapter shown in Fig. 3;
- Fig. 5: a three dimensional view of a mounting system according to the invention comprising a rack with two parallel holding structures and mounting adapters according to the first embodiment;
- Fig. 6: a side view of a second embodiment of a mounting adapter according to the invention together with a telecommunications terminal strip and a rack the strip is mounted on, wherein the mounting adapter is fixed to the rack in a first position and holds a first type of a terminal strip;
- Fig. 7: a detailed view of the mounting adapter shown in Fig. 6;
- Fig.8: a side view of the mounting adapter shown in Fig. 6, wherein the mounting adapter is fixed to the rack in a second position and holds a second type of terminal strip;
- Fig. 9: a detailed view of the mounting adapter shown in Fig. 8;
- Fig. 10: a three dimensional view of a mounting system according to the invention comprising a rack with two parallel holding structures and mounting adapters according to the second embodiment of the invention;
- Fig. 11: a side view of a third embodiment of a mounting adapter according to the invention together with a telecommunications terminal strip and a rack the strip is mounted on, wherein the mounting adapter is fixed to the rack in a first position and holds a first type of a terminal strip;
- Fig. 12: a side view of the mounting adapter shown in fig. 11, wherein the mounting adapter is fixed to the rack in a second position and holds a second type of terminal strip and
- Fig. 13: a three dimensional view of a mounting system according to the invention comprising a rack with two parallel holding structures and mounting adapters according to the third embodiment of the invention.

Herein below various embodiments of the present invention are described and shown in the drawings wherein like elements are provided with the same reference numbers.

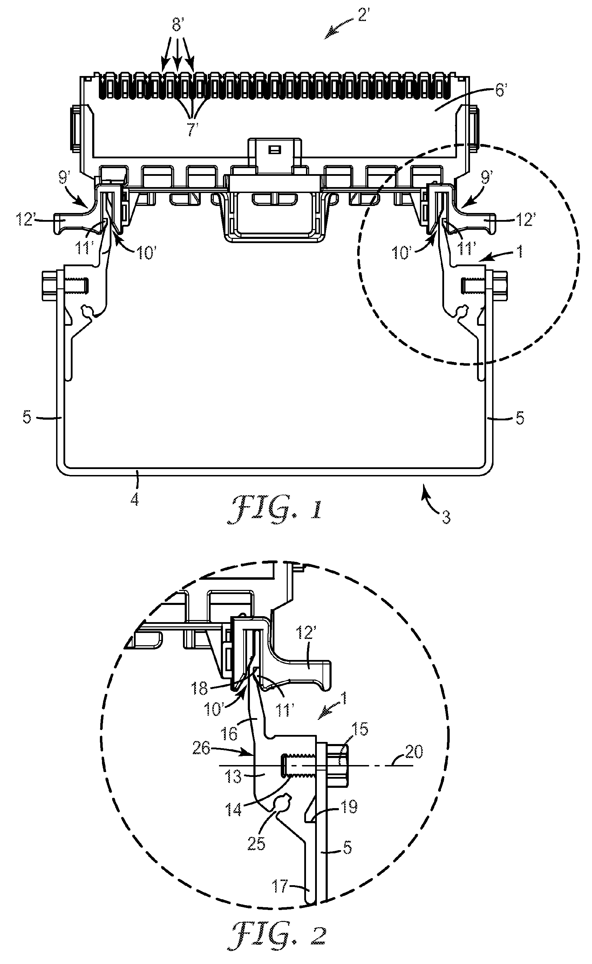

Fig. 1 is a side view of a first embodiment of a mounting adapter 1 according to the invention together with a first type of a telecommunications terminal strip 2' and a rack 3. The mounting adapter 1 is fixed to rack 3 in a first position. This first position will be described in detail with reference to Fig. 2. The mounting adapter 1 is fixed on the inside of the rack 3. The rack 3 is u-shaped and comprises a base 4 and two legs 5 providing a parallel holding structure. The telecommunications terminal strip 2' comprises a housing 6' with several parallel slots 7' oriented in the same direction for providing access to insulation displacement contacts (IDCs) 8' for connecting wires (not shown) therewith. The terminal strip 2' further comprises detachable fixing means 9' with an u-shaped aperture 10'. The aperture 10' comprises a hook 11' for engaging with a corresponding structure on the mounting adapter 1 that will be described with reference to Fig. 2. Wire guide elements 12' are located next to the u-shaped aperture 10'. To the rear side of the terminal strip 2' outside modules (not shown in the drawings) such as for example protection modules and/or splitter modules may be added. They may be located between the strip 2' and the u-shaped rack 3.

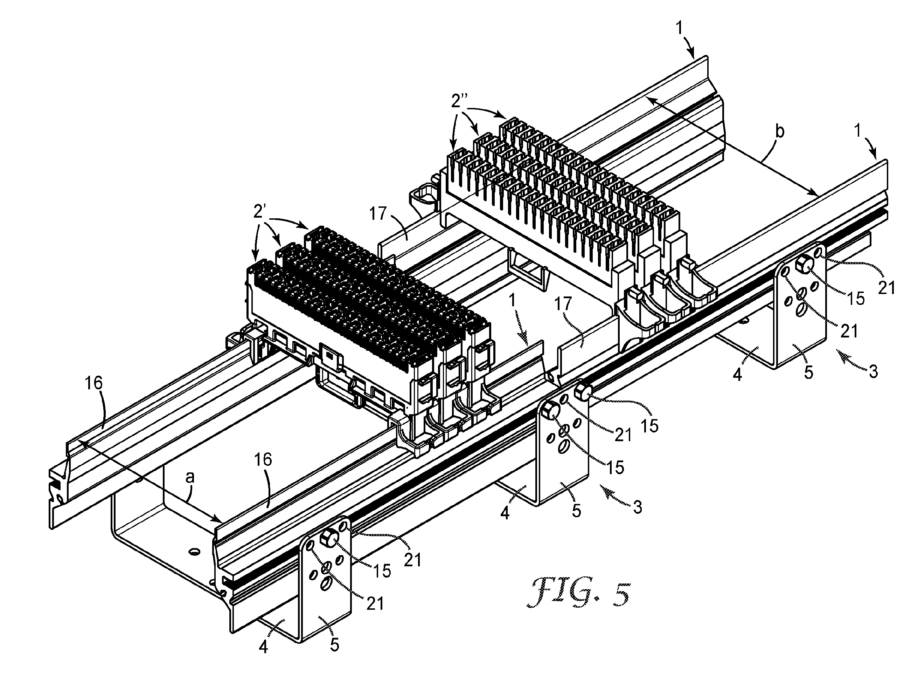

Fig. 2 is a detailed view of the mounting adapter 1 shown in Fig. 1. Only the mounting adapter 1 fixed to the right side of the rack 3 as it is shown in Fig. 1 is described here. The mounting adapter 1 fixed to the left side of the rack 3 is identical to the one on the right side, it only differs in that it is mounted mirror-inverted to the one shown in Fig. 2. The mounting adapter 1 comprises a central portion 13 with a channel 14 for receiving a fixing screw 15 for fixing the mounting adapter 1 to the rack 3. The channel 14 comprises a threaded surface for receiving the screw 15. The screws 15 extend through bores in the legs 5 of the u-shaped rack 3 that will be described with reference to Fig. 5. The central portion 13 also comprises a recess 25 for receiving additional fixing means such as for example screws for mounting additional equipment, such as for example a cover plate (not shown), to the mounting system according to the invention. The central portion 13 further comprises a flat portion 26 which might be used as a contact area for contacts that may be present at outside modules attached to the terminal strip 2' from the rear side. Such outside modules may for example be protection modules, e.g. over voltage protection modules.

The mounting adapter 1 further comprises two extensions 16 and 17 extending from the central portion 13 of the mounting adapter 1 in two opposite directions. In

Fig. 2 the extension 16 extends upwards towards the terminal strip 2' and the extension 17 extends downwards towards the u-shaped rack 3. Each of the extension 16 and 17 is lying in a separate plane that extends perpendicular to the plan of the drawing. The two planes are oriented approximately parallel to each other. In addition, the extensions 16 and 17 extend from opposite sides from the central portion 13. The extension 16 extends from the left side and the extension 17 extends form the right side. One could also say that the extensions 16 and 17 extends offset from each other from the central portion 13 from the mounting adapter 1.

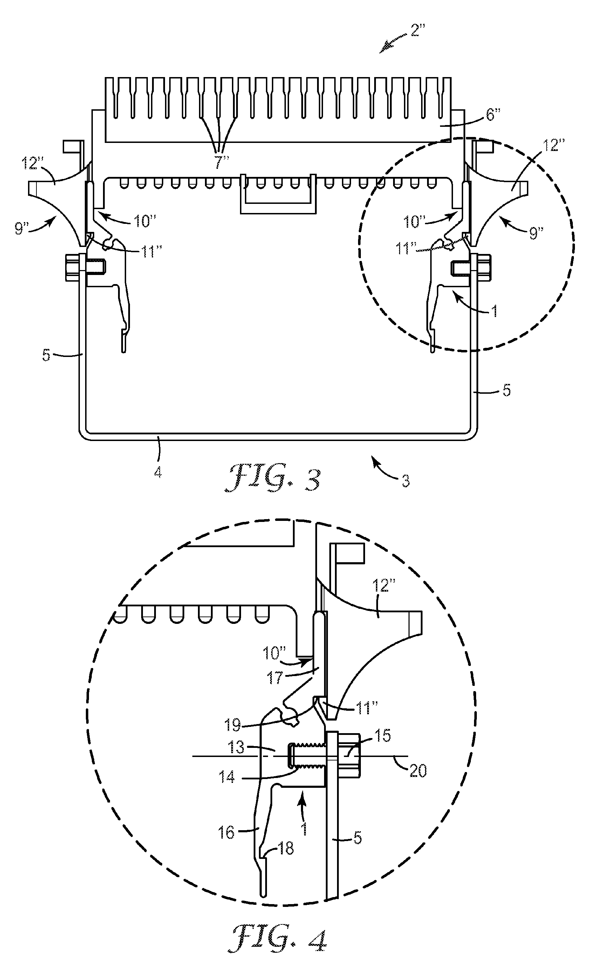

The extension 16 comprises an undercut 18 for receiving a corresponding hook 11' from the terminal strip 2'. By that a detachable fixing means is provided for easily attaching and detaching the terminal strip 2' to the mounting adapter 1. The extension 17 also comprises an undercut that will be described with reference to Fig. 4.

Fig. 3 is a side view of the mounting adapter 1 shown in Figures 1 and 2 together with a second type of a telecommunications terminal strip 2" on the same rack 3 shown in the above mentioned Figures. The mounting adapter 1 is fixed to the rack 3 in a second position. The mounting adapter 1 can be brought from the first position into its second position by rotating it through an angel of 180° for example around a swivel axis 20 through the screw 15 such that the extension 16 now extends downwards and the extension 17 now extends upwards. The telecommunications terminal strip 2" of a second type also comprises a housing 6" with several parallel slots 7" oriented in the same direction for providing access to IDCs (not shown) for connecting wires (also not shown) therewith. The terminal strip 2" further comprises detachable fixing means 9' with an u-shaped aperture 10". The aperture 10" comprises a hook 11" for engaging with a corresponding structure on the mounting adapter 1 that will be described with reference to Fig. 4. Wire guide elements 12" are located next to the u-shaped aperture 10" as well.

Fig. 4 is a detailed view of the mounting adapter 1 in its second position as shown in Fig. 3. As described above, the mounting adapter comprises a central portion 13 with a channel 14 for receiving a fixing screw 15 with a threaded surface. The screw 15 also extends through a bore in the leg 5 of the u-shaped rack 3 and will be described with reference to Fig. 5. The extensions 16 and 17 of the mounting adapter have been described above. Since now extension 17 is directed upwards and since this extension extends from the opposite side of the central portion 13 of the mounting adapter 1, it is possible to mount the telecommunications terminal strip 2" of the second type to the same rack 3 although the length of the terminal strip 2" is longer than the length of the terminal strip 2' of the first type.

The extension 17, which is used for receiving the detachable fixing means of the terminal strip 2" of the second type also comprises an undercut for receiving the corresponding hook 11 ": By that a detachable fixing means is provided for easily attaching and detaching the terminal strip 2" through the mounting adapter 1. Fig. 5 is a three dimensional view of a mounting system according to the invention comprising a rack 3 with two parallel holding structures (legs) 5 and four mounting adapters 1 according to the first embodiment. The mounting adapters 1 are fixed to the rack in two different ways. On the left side of Fig. 5 two parallel mounting adapters 1 are fixed to the rack 3 in the first position - extensions 16 are oriented upwards. On the right side of Fig. 5 two parallel mounting adapters 1 are fixed to the rack 3 in the second position - extensions 17 are oriented upwards. In both positions the mounting adapters are mounted on the inside of the rack 3, that means that viewing from the side to the mounting system, the parallel holding structures of the rack 3 with the legs 5 can be seen. It is also possible to mount the mounting adapters 1 on the outside of the rack 3. In addition, the mounting adapters 1 are fixed to both parallel holding structures and therewith also positioned in a parallel manner.

The legs 5 comprise several bores 21 - here three bores 21 in a row - for receiving fixing screws 15 for fixing the mounting adapters to the rack 3. Each of the three bores 21 may be used to fix the mounting adapters 1 to the rack. The second row of bores may be used to adapt the position of the terminal strips relative to the rack 3. Additional bores may be used to attach additional equipment to the mounting system such as for example cable ties.

The shapes of the two extensions 16, 17 of the mounting adapter 1 are adapted to receive different kind of detachable fixing structures of different types of telecommunications terminal strips 2', 2". Such that when the mounting adapter 1 is mounted in its first position, the extension 16 is directed upwards to receive fixing means of the first type of a strip 2' and when the mounting adapter 1 is mounted in its second position, the extension 17 is directed upwards to receive fixing means of the second type of a strip 2". Extension 16 comprises undercuts 18 that are adapted to receive the hooks 11' of the first type of terminal strip 2' and undercuts 19 are adapted to receive the hooks 11" of the second type of terminal strip 2". In addition, the mounting adapters 1 are shaped such, that depending on the position it is fixed to the rack 3, the distance a between the two parallel mounted extensions 16 is different (here smaller) from the distance b between the two parallel mounted extensions 17. By that it is possible to mount two different types of terminal strips 2', 2" to the same rack 3 with the same mounting adapter 1.

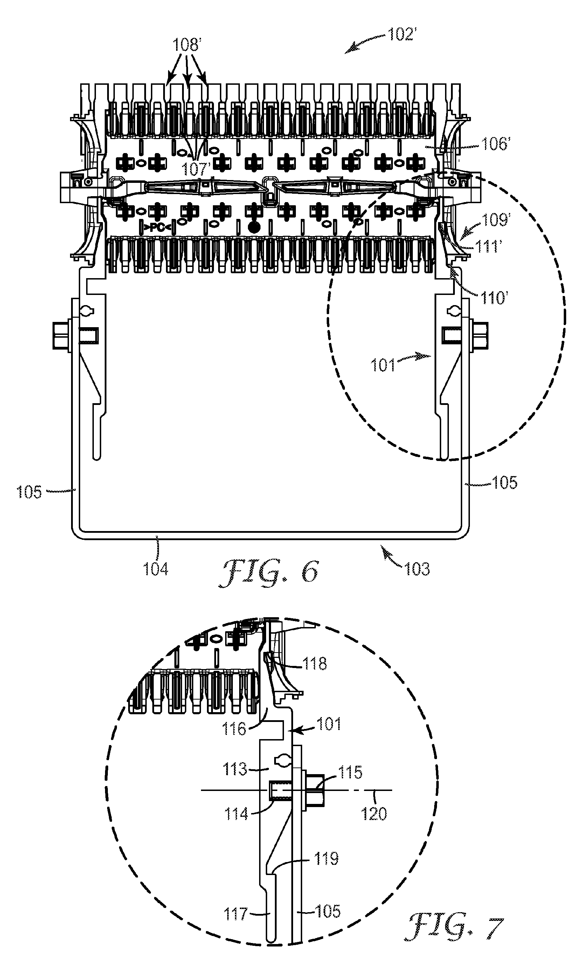

Fig. 6 is a side view of a second embodiment of a mounting adapter 101 according to the invention together with a telecommunications terminal strip 102' and a rack 103. The mounting adapter 101 is fixed to the rack 103 in a first position and holds a first type of terminal strip 102'. The rack 103 is u-shaped and comprises a base 104 and two legs 105 as the rack described above. The telecommunications terminal strip 102' comprises a housing 106' with several parallel slots 107' oriented in the same direction for providing access to the IDCs 108' for connecting wires (not shown) therewith. The terminal strip 102' further comprises on its two outer sides detachable fixing means 109' with an u-shaped aperture 110', the aperture 110' comprising a hook 111' for engaging with a corresponding structure on the mounting adapter 101 that will be described with reference to Fig. 7.

Fig. 7 is a detailed view of the mounting adapter 101 shown in Fig. 6. Only the mounting adapter 101 fixed to the right side of the rack 3 as shown in Fig. 6 is described here. The mounting adapter 101 fixed to the left side of the rack 103 is identical to the one on the right side, it only differs in that it is mounted mirror-inverted. The mounting adapter 101 comprises a central portion 113 as the mounting adapter 1 according to the first embodiment. It also comprises a channel 114 for receiving a fixing screw 115 for fixing the mounting adapter 101 to the rack 103. The screws 115 extend through bores in the legs 105 of the rack 103. The mounting adapter 101 is mounted on the inside of the rack 103.

The mounting adapter 101 further comprises two extensions 116 and 117 extending from the central portion 113 in two opposite directions. In Fig. 7 the extension 116 extends upwards towards the terminals strip 102' and the extension 117 extends downwards towards the u-shaped rack 103. The mounting adapter 101 differs from the mounting adapter 1 according to the first embodiment in that the two extensions 116 and 117 are lying in the same plane extending perpendicular to the plan of the drawing. In other words both extensions 116 and 117 extend at the same side (in Fig. 7 left side) from the central portion 113.

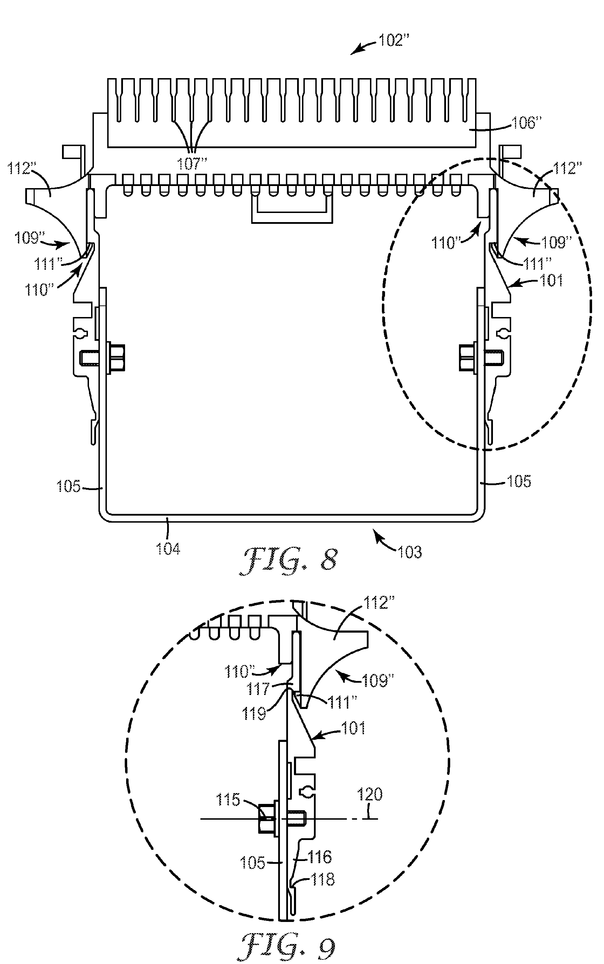

The extension 116 comprises an undercut 118 for receiving a corresponding hook 111' from the terminal strip 102'. Undercut 118 and hook 111' provide a detachable fixing means for easily attaching and detaching the terminal strip 102' on the mounting adapter 101. The extension 117 also comprises an undercut 119 that will be described with reference to Fig. 9.

Fig. 8 and 9 do show the same rack 103 and the same mounting adapter 101 as the one shown in Fig. 6 and 7. The mounting adapter 101 is fixed to the rack 103 in a second position that is on its outside of the rack 103 and rotated through 180° compared with the first position. In the second position the extension 117 extends upwards towards a second type of terminal strip 102" and the extension 116 extends downwards. The shapes of the extensions 116 and 117 differ such that by rotating the mounting adapter 101 from its first position into its second position it is possible to mount two different types of terminal strips 102' and 102" to the same rack 103 by using the same mounting adapter. By fixing the mounting adapter 101 in its first position on the inside of the rack 103 and in its second position on the outside of the rack 103 it is also possible to adapt the distance between two parallel extensions that extend from two mounting adapters 101 fixed to the parallel holding structures 105 of the rack 103.

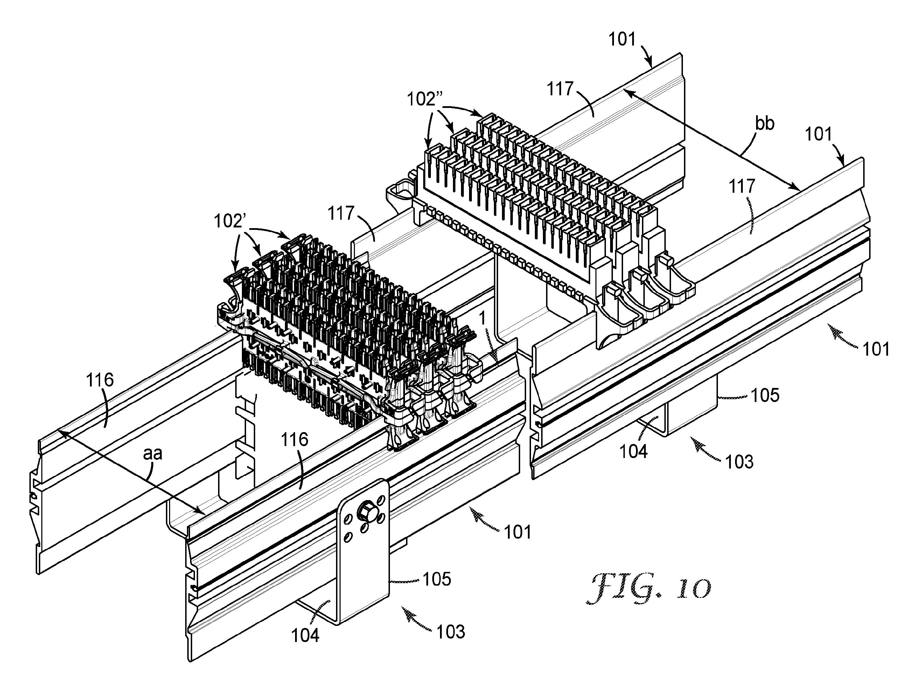

This can be seen in Fig. 10 which is a three dimensional view of a mounting system according to the second embodiment of the invention comprising a rack 103 comprises two u-shaped metal brackets with two parallel legs 105 and four mounting adapters 101. The mounting adapters are fixed to the rack in two different ways. On the left side of Fig. 10 the mounting adapters 101 are fixed to the rack 103 in the first position - inside the rack 103 and extensions 116 are oriented upwards. On the right side of Fig. 10 the mounting adapters are fixed to the rack in the second position - outside the rack 103 and extensions 117 are oriented upwards.

The shapes of the two extensions of the mounting adapter 101 are adapted to receive different kind of detachable fixing structures of different types of telecommunications terminal strips 101', 102". When the mounting adapter 1 is mounted in its first position, the extension 116 is directed upwards to receive fixing means of a first type of a strip 102' and when the mounting adapter 1 is mounted in its second position, the extension 117 is directed upwards to receive fixing means of a second type of a strip 102". In addition the mounting adapters 1 may be fixed on different sides of the rack 103 to adapt the distance between two parallel mounted extensions 116 or 117. In the in Fig. 10 shown embodiment the distance aa between the extensions 116 mounted on the left side of the drawing is smaller than the distance bb between the two parallel mounted extensions 117.

The mounting adapters 1, 101 described above may be made out of an extruded material such as for example an extruded metal or an extruded plastic.

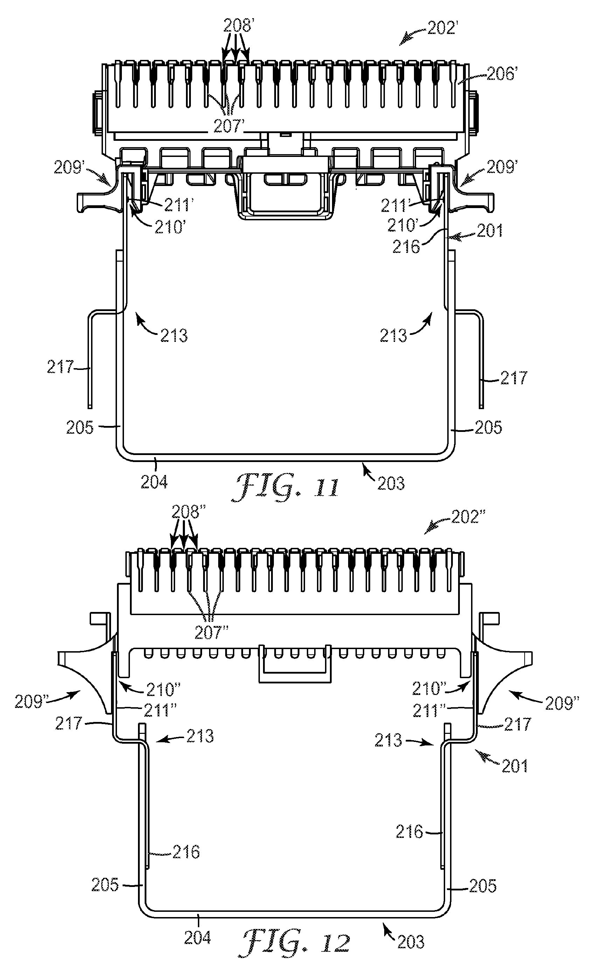

Fig. 11 to 13 show a third embodiment of a mounting adapter 201 according to the invention together with a first type of a telecommunications terminal strip 202' (Fig. 11) and a second type of a terminal strip 202" (Fig. 12). The mounting adapter 201 differs from the two embodiments described above in that it is made out of sheet metal which is bend into the desired shape. The mounting adapter 201 comprises a central portion 213 comprising a portion that extends horizontally in Fig. 11. Only the mounting adapter 201 fixed to the right side of the rack 203 in Fig. 11 is described here. The mounting adapter fixed to the left side of the rack is identical to the one on the right side, it only differs in that it is mounted mirror-inverted to the one positioned on the right side.

The mounting adapter 201 further comprises two extensions 216, 217 extending from the horizontal portion of the central portion 213 in opposite directions. Extension 216 extends upwards towards the terminal strip 202' and its detachable fixing means 209'. Extension 217 extends downwards. The two extensions 216 and 217 are each lying in separate planes that extend perpendicular to the plane of the drawing. The two planes are oriented approximately parallel to each other. In addition, the extensions 216 and 217 extend from opposite sides from the horizontal portion of the central portion 213. In Fig. 11 the extension 216 extends from the left side and the extension 217 extends from the right side. Furthermore, it can be seen from Fig. 11 that the extension 216 extends inside the rack 203 and the extension 217 extends outside the rack 203.

The first type of a terminal strip 202' shown in Fig. 11 comprises a housing 206' with several parallel slots 207' for IDCs 208'. The terminal strip 202' further comprises detachable fixing means 209' with an u-shaped aperture 210' comprising hooks 211' for engaging with a corresponding structure on the mounting adapter 201.

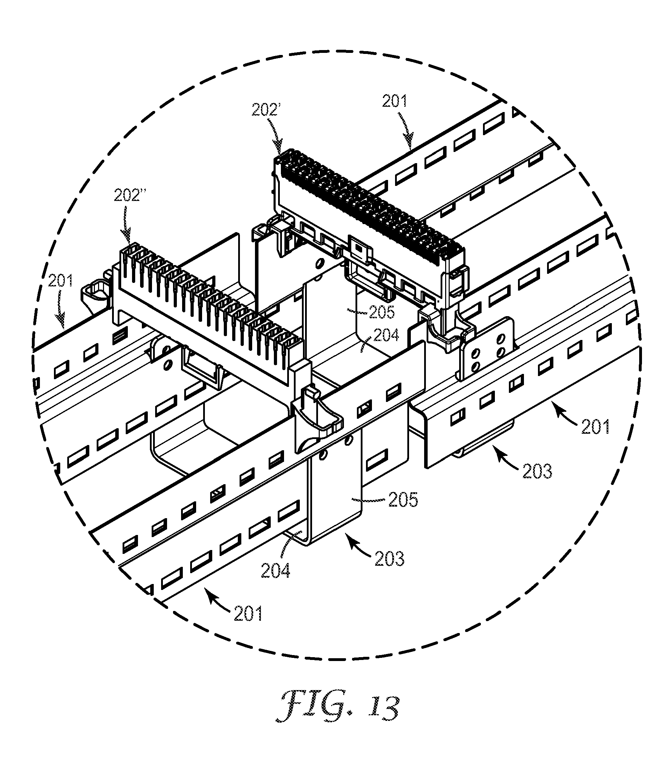

Fig. 12 is a side view of the mounting adapter 201 shown in Fig. 11 together with another type of a telecommunications terminal strip 202" on the same rack 203 as in Fig. 11. The mounting adapter 201 is fixed to the rack 204 in a second position. The mounting adapter 201 can be brought from the first position into its second position by rotating it through an angel of 180° as in the embodiments described above. In the second position the extension 216 extends downwards and the extension 217 extends upwards. The telecommunications terminal strip 202" also comprises a housing 206" with several parallel slots 207" oriented in the same direction for providing access to IDCs 208" for connecting wires therewith (not shown). The terminal strip further comprises detachable fixing means 209" with an u-shaped aperture 210". The aperture 210" comprises a hook 211" for engaging with a corresponding structure on the mounting adapter 201 that will be described with reference to Fig. 13. The adapter 201 may be fixed to the rack by any suitable fixing means such as for example screws, bolts, clips, expansion bolts or blind rivets.

Fig. 13, which is a three dimensional view of a mounting system according to the invention comprising a rack with two parallel holding structures and mounting adapters according to the third embodiment of the invention, it can be seen that the adapter 201 is a rail which is able to hold several telecommunications terminal strips 202' or 203". The adapter rail 201 comprises cut outs 218 and 219 in its extensions 216 and 217. The cut outs 218 and 219 are arranged along the extensions in a recurring manner and they are adapted to receive corresponding hooks 211' and 211" from the detachable fixing means 209' and 209" of the terminal strips 202' and 202" to be mounted on the rack 203.

## Claims

1. Mounting adapter (1; 101; 201) for mounting different types of telecommunications terminal strips (2', 2"; 102', 102"; 202', 202") with detachable fixing means (9', 9"; 109', 109"; 209', 209") on a rack (3; 103; 203) comprising two parallel holding structures (5; 105; 205), the mounting adapter comprising:
- a central portion (3; 103; 203) with a fixing structure for fixing the mounting adapter to the rack;
- at least two extensions (16, 17; 116, 117; 216, 217) extending from the central portion for receiving the detachable fixing means of the terminal strip,
- wherein each of the extensions is adapted to receive the detachable fixing means of a certain type of a terminal strip.

2. Mounting adapter according to claim 1, wherein the mounting adapter (1; 101; 201) may be fixed to the rack (3; 103; 203) in different positions, thereby providing the possibility of adapting the position of the two extensions (16, 17; 116, 117; 216, 217) relative to the rack a terminal strip is mounted on.

3. Mounting adapter according to claim 1 or 2, wherein the two extensions (16, 17; 116, 117; 216, 217) of the mounting adapter (1; 101; 201) extend in opposite directions.

4. Mounting adapter according to any of the preceding claims, wherein the two extensions (16, 17; 116, 117; 216, 217) of the mounting adapter (1; 101; 201) extend in the same direction.

5. Mounting adapter according to any of the preceding claims, wherein the fixing structure of the central portion (3; 103; 203) comprises a channel (14, 114) for receiving fixing screws (15, 115) for fixing the mounting adapter (1; 101; 201) to the rack.

6. Mounting adapter according to any of the preceding claims, wherein the extensions (16, 17; 116, 117) comprise undercuts (18, 19; 118, 119) for receiving latch hooks (11', 11"; 111', 111 ") from the detachable fixing means (9', 9"; 109', 109"; 209') of the telecommunications terminal strips (2', 2"; 102', 102").

7. Mounting adapter according to any of the claims 1 ot 5, wherein the extensions (216, 217) comprise cut outs (218, 219) for receiving latch hooks (211', 211 ") from the detachable fixing means (209', 209") of the telecommunications terminal strips (202', 202").

8. Mounting adapter according to any of the preceding claims, wherein the mounting adapter (1; 101; 201) is a rail.

9. Mounting adapter according to claim 7, wherein the mounting adapter (1; 101; 201) comprises predetermined breaking points to adapt the length of the mounting adapter (1; 101; 201).

10. Mounting adapter according to any of the preceding claims, wherein the mounting adapter (1; 101; 201) is made out of electrically conductive material.

11. Mounting system for mounting different types of telecommunications terminal strips (2', 2"; 102', 102"; 202', 202") with detachable fixing means (9', 9"; 109', 109"; 209', 209"), comprising:
- a rack (3; 103; 203) comprising two parallel holding structures (5; 105; 205);
- at least two mounting adapters (1; 101; 201) according to any of the claims 1 to 10,
wherein the mounting adapter may be fixed to the rack in different positions, thereby providing the possibility of adapting the position of the two extensions (16, 17; 116, 117; 216, 217) relative to a terminal strip to be mounted on the rack.

## Amended claims

### Amended claims in accordance with Rule 137(2) EPC.

**1.** Mounting adapter (1; 101; 201) for mounting different types of telecommunications terminal strips (2', 2"; 102', 102"; 202', 202") with detachable fixing means (9', 9"; 109', 109"; 209', 209") on a rack (3; 103; 203) with two parallel holding structures (5; 105; 205), the mounting adapter comprising:
- a central portion (13; 113; 213) with a fixing structure for fixing the mounting adapter to the rack;
- at least two extensions (16, 17; 116, 117; 216, 217) extending from the central portion for receiving the detachable fixing means of the terminal strip,
- wherein each of the extensions is adapted to receive the detachable fixing means of a certain type of a terminal strip.

**2.** Mounting adapter according to claim 1, wherein the mounting adapter (1; 101; 201) may be fixed to the rack (3; 103; 203) such that the position of the two extensions (16, 17; 116, 117; 216, 217) relative to the rack a terminal strip is mounted on may be adapted.

**3.** Mounting adapter according to claim 1 or 2, wherein the two extensions (16, 17; 116, 117; 216, 217) of the mounting adapter (1; 101; 201) extend in opposite directions.

**4.** Mounting adapter according to any of the preceding claims, wherein the two extensions (16, 17; 116, 117; 216, 217) of the mounting adapter (1; 101; 201) extend in the same direction.

**5.** Mounting adapter according to any of the preceding claims, wherein the fixing structure of the central portion (3; 103; 203) comprises a channel (14, 114) for receiving fixing screws (15, 115) for fixing the mounting adapter (1; 101; 201) to the rack.

**6.** Mounting adapter according to any of the preceding claims, wherein the extensions (16, 17; 116, 117) comprise undercuts (18, 19; 118, 119) for receiving latch hooks (11', 11"; 111', 111") from the detachable fixing means (9', 9"; 109', 109"; 209') of the telecommunications terminal strips (2', 2"; 102', 102").

**7.** Mounting adapter according to any of the claims 1 to 5, wherein the extensions (216, 217) comprise cut outs (218, 219) for receiving latch hooks (211', 211") from the detachable fixing means (209', 209") of the telecommunications terminal strips (202', 202").

**8.** Mounting adapter according to any of the preceding claims, wherein the mounting adapter (1; 101; 201) is a rail.

**9.** Mounting adapter according to claim 7, wherein the mounting adapter (1; 101; 201) comprises predetermined breaking points to adapt the length of the mounting adapter (1; 101; 201).

**10.** Mounting adapter according to any of the preceding claims, wherein the mounting adapter (1; 101; 201) is made out of electrically conductive material.

**11.** Mounting system for mounting different types of telecommunications terminal strips (2', 2"; 102', 102"; 202', 202") with detachable fixing means (9', 9"; 109', 109"; 209', 209"), comprising:
- a rack (3; 103; 203) comprising two parallel holding structures (5; 105; 205);
- at least two mounting adapters (1; 101; 201) according to any of the claims 1 to 10,
wherein the mounting adapter may be fixed to the rack such that the position of the two extensions (16, 17; 116, 117; 216, 217) relative to a terminal strip to be mounted on the rack may be adapted.
